(19) Europäisches Patentamt
European Patent Office
Office européen des brevets

(11) **EP 2 787 610 B1**

(12) **EUROPÄISCHE PATENTSCHRIFT**

(45) Veröffentlichungstag und Bekanntmachung des Hinweises auf die Patenterteilung:
**22.07.2015   Patentblatt 2015/30**

(51) Int Cl.:
*H02K 15/02* ^(2006.01)      *B21D 28/22* ^(2006.01)

(21) Anmeldenummer: **13162457.9**

(22) Anmeldetag: **05.04.2013**

(54) **Verfahren und Vorrichtung zur Herstellung von Statoren und Rotoren für axiale Motoren**

Method and device for the manufacture of stators and rotors for axial motors

Procédé et dispositif de fabrication de stators et de rotors pour des moteurs axiaux

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(43) Veröffentlichungstag der Anmeldung:
**08.10.2014   Patentblatt 2014/41**

(73) Patentinhaber: **F. Boccadoro SA**
**6616 Losone (CH)**

(72) Erfinder: **Boccadoro, Ferdinando**
**6648 Minusio (CH)**

(74) Vertreter: **De Colle, Piergiacomo**
**Georg Fischer AG**
**Patentabteilung**
**Amsler-Laffon-Strasse 9**
**8201 Schaffhausen (CH)**

(56) Entgegenhaltungen:
| | |
|---|---|
| EP-A2- 1 517 427 | DE-A1- 2 353 730 |
| JP-A- S5 646 648 | JP-A- S5 688 655 |
| JP-A- H02 231 943 | JP-A- H08 163 835 |
| JP-A- 2012 125 032 | US-A- 4 403 489 |

**Beschreibung**

Die vorliegende Erfindung betrifft eine Vorrichtung zum Stanzen und Aufwickeln eines Bandes für die Herstellung von Statoren und Rotoren für axiale Motoren und Generatoren gemäss dem Oberbegriff des Anspruches 1.

HINTERGRUND DER ERFINDUNG

Axialmotoren bestehen im wesentlichen in ihrer einfachsten Ausführung aus einem Stator und einem Rotor, die eine Scheibenform haben und auf derselben Achse rotieren. Stator und Rotor sind von einem kleinem Luftspalt getrennt. Vorzugsweise werden auf dem Stator - in Aussparungen oder Nuten - Kupferwicklungen montiert.

Abhängig vom Motortyp sind die Rotoren mit Magneten oder mit einer Kurzschlussankerkäfig versehen.

Zur Herstellung der Statoren und Rotoren für Axialmotoren wird ein dünnes gewalztes Blechband auf einem Dorn zu einem Blechpaket gewickelt. Das Blechband ist mit vielen einzelnen Nuten versehen, die am gewickelten Blechpaket eine bestimmte Anzahl von radial angeordneten Aussparungen zur Aufnahme der Kupferwicklungen bilden.

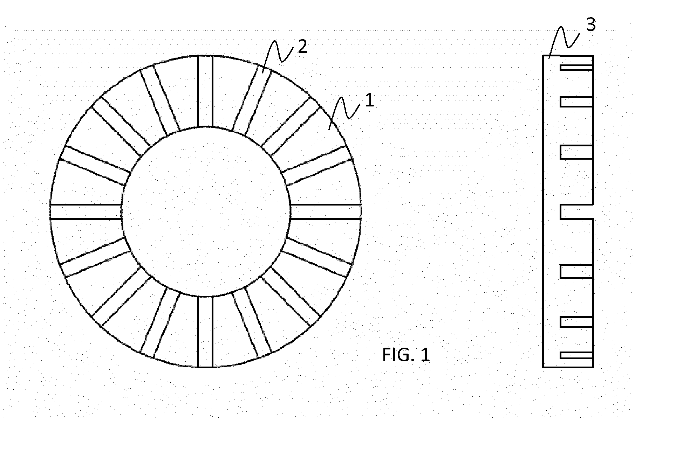

Fig. 1 zeigt ein aufgewickeltes Blechpaket. Dieses Blechpaket besteht aus einem Band aus Magnetoblech; es wird durch Überlagern mehrerer Schichten mit vorgestanzten Nuten, die radial mit hoher Präzision ausgerichtet werden müssen, hergestellt. Die Stegbreite, nämlich der Abstand zwischen die Nuten in Richtung des Außendurchmessers des Paketes, wird während der Herstellung progressiv erhöht.

Es ist nicht möglich, zuerst das Blechband zu einem Blechpaket zu wickeln und dann eine Aussparung durch das gesamte Blechpaket, zum Beispiel durch Fräsen einzubringen, da eine solche Bearbeitung Kurzschlüsse zwischen den Blechbandschichten verursachen würde. Diese Kurzschlüsse führen bekanntlich zu einer Erhöhung der Wirbelströme und somit zu Einbussen beim Motorwirkungsgrad. Idealerweise sollten die Nuten jeweils unmittelbar an der Tangente des Blechbandes am Blechpaket, d.h. radial gestanzt werden; dieses Verfahren ist herstellungstechnisch jedoch nicht anwendbar. In der Praxis werden die einzelnen Nuten daher vorgestanzt und das Blechband auf einen Dorn gewickelt.

Der Abstand zwischen den einzelnen Nuten muss nach jedem Stanzvorgang inkrementiert werden, damit die Aussparungen am aufgewickelten Blechpaket ausgerichtet sind.

Es ist zu betonen, dass die Genauigkeit der Nutenausrichtung ein ganz wichtiges Merkmal des Blechpakets ist. Wenn die Nuten nicht genau ausgerichtet sind, so können die Kupferwicklungen nicht das ganze Volumen der Aussparungen besetzen und der Motorwirkungsgrad wird in der Folge nicht optimal.

Für Hochleistungsmotoren beträgt die erforderliche Genauigkeit der Nutenausrichtung typischerweise 0,1 mm bzw. $\pm$ 0,05 mm.

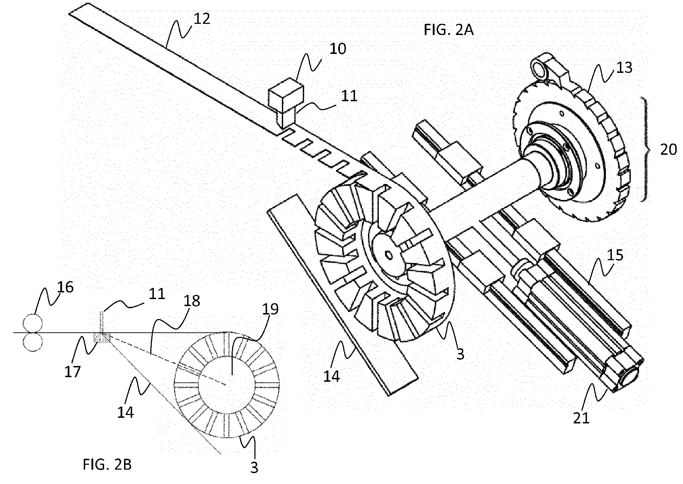

In einer bekannten Bauweise für Stanz- und Wickelmaschinen wird das aufzuwickelnde Blechpaket auf einer schiefen Ebene geführt und das gesamte Blechpaket allmählich von der Stanzeinheit wegentfernt. Auf diese Weise wird der Abstand zwischen den gestanzten Nuten nach und nach vergrössert. Maschinen mit einer solchen Bauweise werden seit mehr als vierzig Jahren von der Firma F. Boccadoro SA in Losone, Schweiz hergestellt und vermarktet. Eine solche Stanz-und Wickelmaschinen ist in den Figuren 2A und 2B dargestellt. Die Maschine besteht hierbei aus aus einer Stanzeinheit 10 und aus einer Wickeleinheit 20.

Zunächst wird das Band auf einen Dorn 19 positioniert und mittels eines Hakens befestigt. Das Band ist durch Führungsrollen 16 geführt und gebremst. Dann beginnt die Bearbeitung, wobei jeweils eine Nut ausgestanzt und das Paket über ein Sperrrad 13 um 360 /N Grad gedreht wird. Um sicherzustellen, dass der Abstand zwischen den Nuten allmählich zunimmt, ist das aufgewickelte Paket gezwungen, über eine geneigte Ebene 14 durch ein System von Führungen 15 zu gleiten. Sowohl die Führungen 15 wie die geneigte Ebene 14 sind geometrisch auf den Stanzpunkt 17 ausgerichtet (siehe Fig. 2B).

Bei diesen bekannten Maschinen ist die Genauigkeit der Nutenausrichtung verbesserunsgsfähig. Ausserdem kann die Stanzfrequenz nicht erhöht werden, da die Maschine zwischen zwei Stanzvorgängen warten muss bis das Blechpaket die neue Position auf der Gleitebene erreicht hat und die durch den vorhergehenden Stanzvorgang hervorgerufenen Oszillationen ausklingen.

Eine mögliche Massnahme zur Verbesserung der Nutenausrichtung ist in der Patentschrift US 4,403,489 offenbart.

Das Funktionsprinzip dieser Maschine beruht auf der Messung der Dicke des Bandes. Die gemessene Banddicke wird verwendet, um den Nutenabstand zu bestimmen.

Dieses Verfahren ist jedoch nicht besonders zuverlässig, da die Banddicke eine sensible und schwer erfassbare Grösse ist. Zur Begründung: Das Inkrement pro Stanzvorgang, also der Betrag um welchen der Abstand zwischen der Stanzeinheit und der Wickeleinheit zu erhöhen ist lautet:

$$DL = 2\pi \cdot T / N \cdot F$$

wobei der Abstand DL das Inkrement pro Stanzvorgang, T die Banddicke, N die Anzahl Nuten pro volle Umdrehung des Blechpakets (360 Grad), und F der Stapelfaktor darstellen. Der Stapelfaktor ist ein Mass für die Packungsdichte, d.h. die Dichte mit welcher die Blechbandschichten aufeinanderliegen. Der Stapelfaktor ist nicht kontrollierbar, denn er ist von vielen Parametern abhängig, insbesondere von der Bremskraft des Bandes, der Geradlinigkeit des Bandes, der Banddicke (wieder), von Maschinenschwingungen usw. Die Packungsdichte wäre 1, wenn die einzelnen Schichten ohne Spalt geometrisch genau aufeinanderliegen würden. Dies lässt sich in der Realität kaum erreichen. Folglich wird das Inkrement pro Stanzvorgang DL durch viele Faktoren beeinflusst.

Ausserdem ist die Sauberkeit der Bandoberfläche im Produktionsbetrieb nicht unbedingt sichergestellt, weshalb mit einer Beeinträchtigung der Messgenauigkeit zu rechnen ist. Gerade die genaue Messung der Banddicke ist bei diesem Verfahren aber besonders wichtig.

Die Messung der Banddicke im Produktionsbetrieb ist jedoch nicht einfach und bereits ein kleiner Fehler bei der Messung der Dicke führt zu einem grossen Fehler in der Nutenausrichtung. Betrachtet man zum Beispiel das Wickeln eines Blechbandes von 0,5 mm Dicke mit einem idealisierten Stapelfaktor von 1: Der zu erwartende Messfehler bei der Messung der Banddicke beträgt typischerweise $\pm$ 20 $\mu$m. Zu den Einflussfaktoren zählen nebst der Ungenauigkeit des Messsystems auch der thermische Drift des Sensors, die schlechte Oberflächenqualität des Bandes, Vibrationen, usw. Beim Wickeln einer Schicht auf den gesamten Umfang des Rotors ergibt sich die folgende Länge am Umfang des Blechpakets:

$$DLlayer = N \cdot 2\pi \cdot (T + \varepsilon) / (N \cdot F) = 2\pi \cdot (T + \varepsilon),$$

also eine Ausrichtungsfehler von $2\pi\varepsilon$ oder $\pm$ 0,1256 mm, was über der industriellen Toleranz für diese Art von Rotoren liegt.

Der vorliegenden Erfindung liegt daher die Aufgabe zugrunde, eine Vorrichtung zu schaffen, welche die genannten Nachteile beseitigt, d.h. eine hohe Genauigkeit bei der Ausrichtung der Nuten beim Aufwickeln eines vorgestanzten Blechbandes erreicht.

Diese Aufgabe wird durch die Merkmale des unabhängigen Anspruches 1 gelöst.

Dank der Verwendung eines Sensors an der erfindungsgemässen Stanz- und Wickelmaschine, wird die Position der Nutränder auf dem aufgewickelten Blechband des Blechpaket erfasst und ausgewertet. Die Ist-Position wird mit der Soll-Position verglichen. Bei festgestellter Abweichung werden die Antriebsmittel zum Verändern der Position der Wickeleinheit derart gesteuert, dass die festgestellte Positionsabweichung bzw. -fehler der Nutränder ausgeglichen werden.

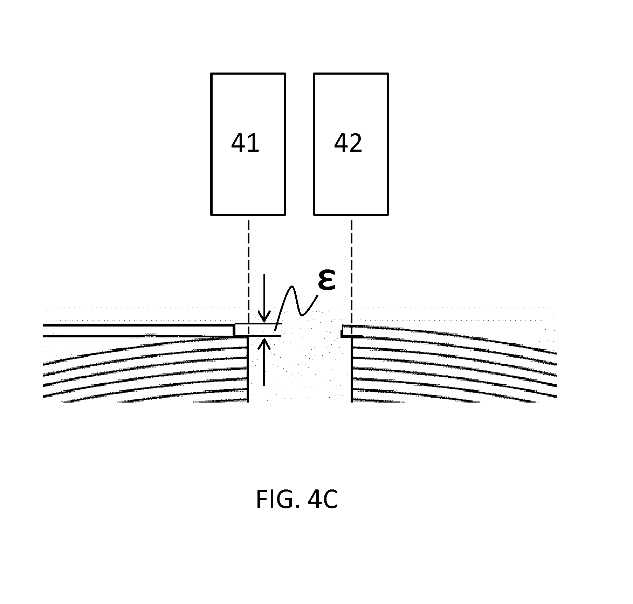

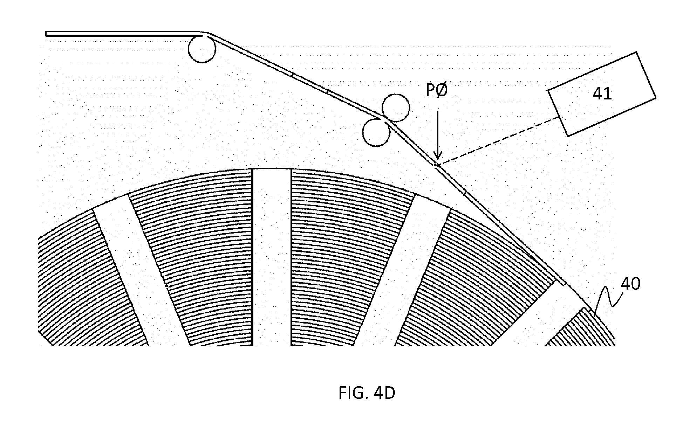

Die grundsätzliche Funktionsweise der erfindungsgemässen Stanz- und Wickelmaschine , d.h. das Stanzen und Aufwickeln des Blechbandes zu einem Blechpaket bleibt dem bekannten Prinzip gleich. Um die hochpräzise Ausrichtung der Nuten zu erreichen, misst die vorliegende Erfindung jedoch im Unterschied zu den Vorrichtungen aus dem Stand der Technik die genaue Position des Nutrandes tangential zum bereits aufgewickelten Blechpaket oder in unmittelbarer Nähe dieses Punktes (Fig. 4D).

Wenn die Ist-Position bezüglich der Soll-Position variiert, wird der gemessene Positionsfehler des Nutenrandes verwendet, um die relative Position des Blechpakets auf dem Schlitten und in Bezug auf die Stanzeinheit mittels eines Servomotors zu verändern.

Auf diese Weise können nicht nur die Schwankungen der Banddicke, sondern auch eventuelle andere mechanische Fehler der Stanz- und Wickelmaschine kompensiert werden.

Erfindungsgemäss können entstandene Positionsfehler der Nutenränder unterschiedlich ausgeglichen werden.

In einer bevorzugten Ausführungsform der Erfindung, wird das Paket während des Aufwickelns allmählich weg von der Stanzeinheit um einen Abstand DL pro Stanzvorgang bewegt. Der Wert DL wird von der Steuereinheit aus dem Sollwert der Dicke, entsprechend dem verwendeten Band berechnet.

Diese Bewegung wird durch einen weiteren Sensor am Stanzwerkzeug ausgelöst, der ein Signal auslöst sobald das gestanzte Band das Stanzwerkzeug verlässt. Die Bewegung kann hierbei durch eine mittels Servomotor angetriebene Leitspindel ausgeführt werden, welche die Position des Blechpaketes verstellt.

Um eine hochpräzise Ausrichtung der Nuten zu erreichen, wird in einer besonders bevorzugten Ausführungsform der Erfindung, die Position der auf dem Blechband gestanzten Nutränder auf oder in unmittelbarer Nähe der Berührungslinie bzw. Aufwicklungsstelle des Blechbandes auf dem Blechpaket (siehe Figureb 4A bis 4D) gemessen. Wenn diese Ist-Position bezüglich der Soll-Position variiert, wird dieser Positionsfehler - multipliziert mit einem Koeffizient - zum Wert DL addiert, sodass der gemessene Positionsfehler beim nächsten auszuführenden Stanzvorgang kompensiert wird.

Es soll nicht unerwäht bleiben, dass die erfindungsgemässe Messung der Nutränder auch messtechnisch wesentlich genauer zu bewerkstelligen ist, als die aus dem Stand der Technik bekannte - und technisch unpräzisere - Messung der Banddicke. Darüber hinaus hat selbst ein entstehender Meßfehler bei der erfindungsgemässen Nutenrandmessung, rein rechnerisch gesehen, eine um den Faktor $2\pi$ kleinere Auswirkung als ein bei der Banddickenmessung auftretender Messfehler. Darüber hinaus werden mit der erfindungsgemässen Messmethode nicht nur die Schwankungen in der Dicke des Blechbandes, sondern auch weitere, z.B. maschinenseitige beim Produktionsvorgang entstehende mechanische Fehler kompensiert.

In einer weiteren Ausführungsform der Erfindung wird ein weiterer Nachteil bekannter Stanz- und Wickelmaschine behoben: Die Unförmigkeit der Blechpakte zu Beginn ihrer Entstehung. Zu Beginn ist die notwendige mechanische Verformung des Blechbandes nämlich gross. Wenn diese mechanische Verformung gross ist, besteht das Risiko, dass das Blechpaket keine zylindrische bzw. kreisrunde Form annimmt bzw. dass das Blechband seine ursprüngliche ungekrümmte Form behält. Das Blechpaket nimmt somit eine polygonale Form an anstelle der gewünschten Kreisform.

In dieser weiteren Ausführungform der Erfindung wird die bisher beschriebene erfindungsgemässe Stanz- und Wickelmaschine um eine weitere erfinderische Vorrichtung ergänzt, um letztgenanntes Problem zu lösen. Bei dieser weiteren erfinderischen Vorrichtung handelt es sich um eine Bandbiegeeinheit, welche vorzugsweise direkt nach dem Stanzwerkzeug angeordnet wird. Die erfinderische Bandbiegeeinheit krümmt das gestanzte, gerade Blechband mechanisch vor und gibt dem aufzuwickelnden Blechband damit die gewünschte Krümmung damit es auf dem neu entstehnden Blechpaket ohne übermässige weitere Krümmung aufgewickelt werden kann. Die erfinderische Bandbiegeeinheit funktioniert mit mindestens drei verstellbaren Anpressrollen, mit welchen das Blechband eine perfekte Kreisform erhält. Damit kann ein gleichmässiger, kreisförmiger Statorkern hergestellt werden für unterschiedliche Blechpaketgrössen.

Die Erfindung sowie bevorzugte Ausführungformen daraus werden nachfolgend anhand von verschiedenen Ausführungsbeispielen mit Bezug auf schematischen

Figuren erläutert. Es soll an dieser Stelle ausdrücklich darauf hingewiesen werden, dass sich die Erfindung nicht auf die in den Beispielen gezeigten Ausführungsformen beschränkt.

| | |
|---|---|
| Fig. 1 | gewickelten Stator für einen Axialmotor |
| Fig. 2a &2b | schematische Darstellung einer bekannten Stanz-und Wickelmaschine gemäss Stand der Technik, unter Verwendung einer geneigten Ebene. |
| Fig. 3 | eine schematische Darstellung einer Stanz-und Wickelmaschine nach dem Stand der Technik, unter Verwendung einer Spindel. |
| Fig. 4a - 4d | mögliche Implementierungen des erfindungsgemässen Positionssensors am Nutrand |
| Fig. 5 | eine schematische Darstellung einer Stanz-und Wickelmaschine nach der Erfindung, unter Verwendung einer geneigten Ebene. |
| Fig. 6 | eine schematische Darstellung einer Stanz-und Wickelmaschine nach der Erfindung, unter Verwendung einer Spindel. |
| Fig. 7 | ein polygonales Paket |
| Fig. 9 | die Abrundungsvorrichtung |

Die Figur 1 wurde bereits weiter vorne erläutert. Dargestellt ist ein Blechpaket 1 in einer idealisierten, schematischen Darstellung welches Nuten 2 enthält. Das dargestellte Blechpaket wird als Stator verwendet.

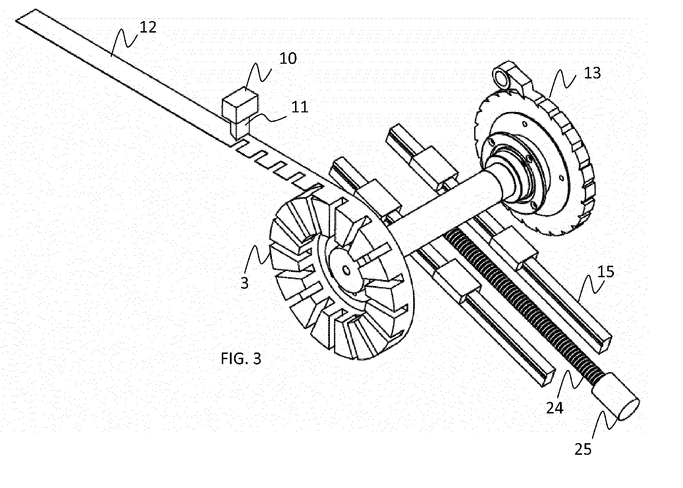

Die Figuren 2A, 2B und 3 zeigen einen schematische Darstellung einer Stanz- und Wickelmaschine nach dem Stand der Technik. Deren Nachteile wurden bereits weiter vorne erläutert. Die Figur 2A zeigt eine Stanz- und Wickelmaschine, welche mit einem hydraulischen Dorn 21 funktioniert. Die in der Figur 3 dargestelle Maschine funktioniert hingegen mit einer angetriebenen Leitspindel 24. Bei beiden Varianten wird das gelagerte Blechpaket 3 auf Führungen 15 bewegt.

Die Erfindung sieht nun vor, dass einer herkömmlichen Stanz- und Wickelmaschine erfindungsgemäss Sensoren zugeordnet werden, welche die Position der Nutenränder auf dem Blechband des Blechpaketes erfassen und diese Ist-Position mit einer Sollposition vergleichen und bei festgestellter Abweichung die Antriebsmittel der Wickeleinheit deart steuern, dass die Positionsabweichung ausgeglichen wird.

Die Sensoren können die Ist-Position der gestanzten Nutenränder an verschiedenen Stellen nach der Stanzeinheit messen. Das gemessene Blechband kann sich hierbei noch zwischen Stanzeinheit und Blechpakt oder bereits im auf dem Blechpaket aufgewickelten Zustand befinden.

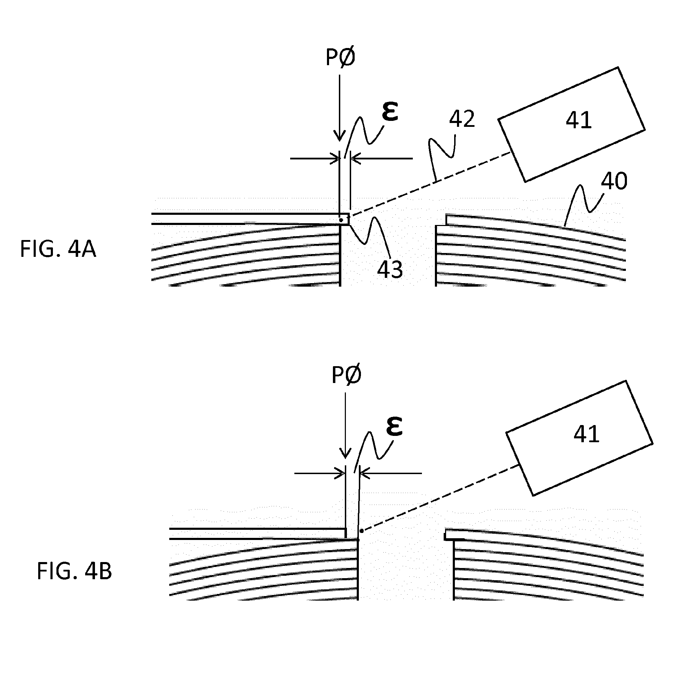

Um die Genauigkeit der Bearbeitung zu erhöhen, sieht die Erfindung die Messung der Abweichung des ausgestanzten Nutenrandes 43 vorzugweise dann vor, wenn sich der Nutenrand 43 bereits auf dem Blechpaket 1 befindet. Gemessen wird der Nutenrand bzw. die Nutenkante am Punkt P0 (siehe Figuren 4a bis d).

Auf dieser Weise wird genau dort gemessen, wo die Genauigkeit erforderlich ist, dass heisst an der Lage der Nutenausrichtung auf dem Blechpaket 1.

Der Sensor 41 ist vorzugsweise vom optischen Typ, vorzugsweise ein Lasertriangulationssensor oder ein konfokaler Sensor, zum Beispiel ein Sensor wie er von der Firma Micro Epsilon (www.micro-epsilon.de) hergestellt wird.

Auch Sensoren die optisch eine Bilderkennung liefern, können erfolgreich verwendet werden.

Des Weiteren können erfindungsgemäss auch Sensoren, welche auf anderen Messsystemen beruhen, wie beispielsweise induktive oder kapazitive Sensoren, entsprechend Anwendung finden. Die Erfindung ist nicht auf einem bestimmten Sensortyp eingeschränkt.

Der mittels Sensor gemessene Fehler - d.h. der Unterschied zwischen Ist- und Soll-Position des Nutenrandes - wird verwendet, um die Position des Blechpakets 1 bzw. 3 zu korrigieren (siehe Figuren). Im Fall einer Maschinenausführung bei welcher sich das Blechpaket 1, 3 auf einer geneigten Ebene bewegt, wird diese horizontal verlegt, so dass der Ursprung der Halbierungslinie 18 nicht mehr mit dem Stanzpunkt 17 zusammenfällt (vergleiche Figuren 2A und 2B).

Im Fall der Maschinenausführung bei welcher das Paket durch einer Leitspindel 24 und einen Antrieb 25 (siehe Fig.3) bewegt wird, wird die berechnete Korrektur durch einen Faktor, der proportional zu dem gemessenen Fehler ist, das heisst

$$DL = DL + k * epsilon$$

korrigiert.

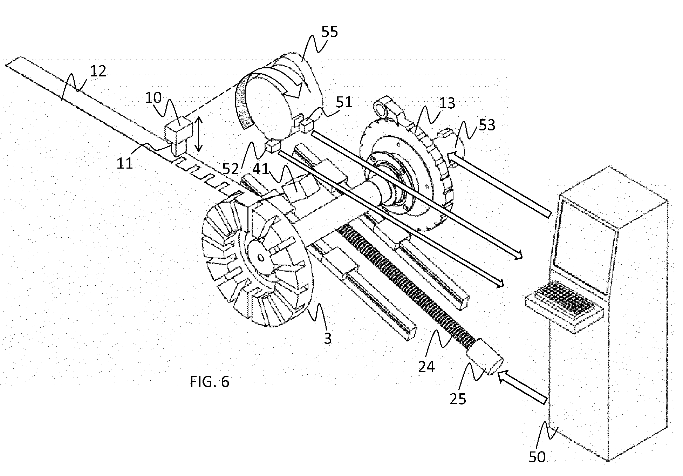

Im Folgenden werden Messanordnungen vorgestellt. Im Falle der Fig. 4a, ist das Band zu weit positioniert (Nutrand 43 bzw. P0 steht vor), so dass das Blechpaket nicht genug von der Stanzeinheit weit entfernt ist. In diesem Fall muss das Blechpaket auf der geneigten Ebene 14 vom Punkt 17/11 weiter entfernt werden (vgl. Fig.5) bzw. die Korrektur k* epsilon wird positiv ausfallen, siehe Fig. 6.

Im Falle 4B ist das Band nicht weit genug positioniert (Nutrand 43 bzw. P0 ist rückversetzt). In diesem Fall ist die Entfernung des Blechpaket von der Stanzeinheit nicht ausreichend, deshalb muss das Blechpaket auf der geneigten Ebene 14 zur Stanzvorrichtung bzw. Punkt 17/11 angenähert werden (die Korrektur k* epsilon ist negativ).

Die Fig . 4c zeigt eine weitere erfindungsgemässe Variante, welche vorzugsweise für weniger präzise Sensoren Anwendung findet oder für Sensoren die unter erschwerten Bedingungen arbeiten müssen. Die zwei Sensoren 41 und 42 melden nur das Vorhandensein des Bandes in einer Umgebung des Punktes P0 an. Wenn der Sensor 41 das Fehlen des Bandes und der Sensor 42 seine Anwesenheit anmeldet, dann entspricht dies einer äquivalenten Situation zum Fall gemäss der Figur 4B. Diese Methode liefert nicht den Ausmass des Fehlers, sondern nur das Vorzeichen (vor- oder nachlaufendes Blechband). Die Korrektur erfolgt dann in Feedforward-Weise, nämlich es wird um einen quantisierten Betrag in Richtung des Vorzeichens korrigiert.

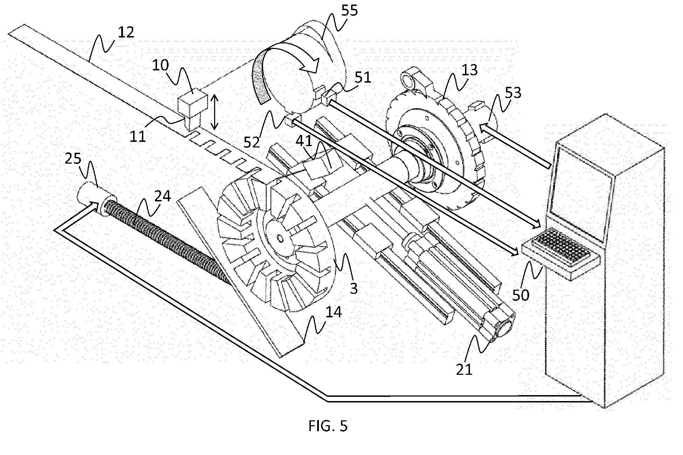

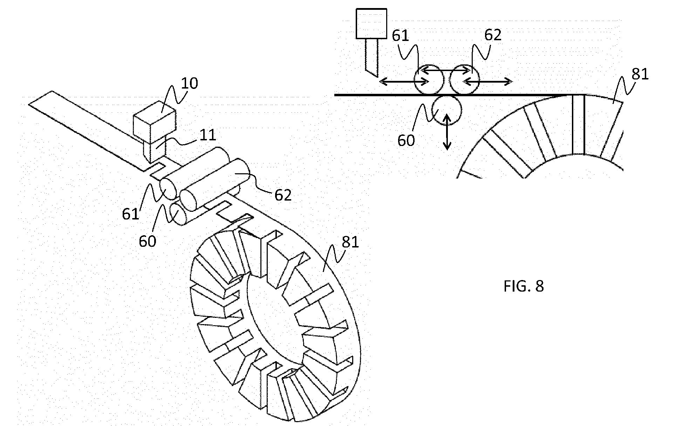

Die Fig. 4d zeigt eine weitere erfindungsgemässe Variante, welche vorzugsweise für den Fall Anwendung findet, bei welchem das Paket nicht die neue Winkelposition in kurzer Zeit, sondern erst nach einem vergleichsweise längeren Ausschwingvorgang des Blechbandes erreicht. Um sicherzustellen, dass die Bandposition bei der Messung stabil ist, wird das Band, unmittelbar bevor es gewickelt wird, zwischen zwei Rollenführungen geführt und die Messung wird dort vorgenommen, nicht erst bei der Tangente am Blechpaket im gewickelten Zustand. Diese eben genannten Rollenführungen können mit den Rollen 60 und 62 aus Figur 8 zusammenfallen. Die Fig. 5 zeigt eine schematische Darstellung einer Stanz-und Wickelmaschine nach der Erfindung. Die Stanzeinheit 10 wird durch einem Exentermechanismus 55 gesteuert.

Die Extenterwelle ist mit zwei Nocken versehen, welche weitere Sensoren bzw. Auslöseeinheiten 51 und 52 betätigen.Wenn das Stanzwerkzeug 11 in der Bandoberfläche eindringt, sendet der Sensor bzw. die Auslöseeinheit 51 ein Signal zur Steuereinheit 50. Die Steuereinheit 50 misst daraufhin die Position eines Nutenrandes über den erfindungsgemässen Sensor 41.

Wenn das Stanzwerkzeug 11 aus der Bandoberfläche sich rückzieht, sendet der Sensor bzw. Auslöseeinheit 52 ein Signal zur Steuereinheit 50. Die Steuereinheit 50 korrigiert mittels desAntriebes 25 den Fehler, indem es das Blechpaket 3 auf der Gleitebene 14 bewegt. Das Sperrrad 13, mechanisch oder elektronisch (durch den Antrieb 53) mit der Stanzeinheit 10 synchronisiert, dreht das Paket um 360 / N Grad, und der Zyklus wird bis zum programmierten Enddurchmesser des Pakets wiederholt.

Ein hydraulischer Kolben 21 drückt das Blechpaket 1 bzw. 3 gegen die Gleitebene Das Blechpaket 1 bzw. 3 muss sich auf der Gleitebene 14 bewegen, da sein Durchmesser ständig wächst, und sein einziges Freiheitsgrad auf der Gerade 18 liegt (siehe Fig. 2B).

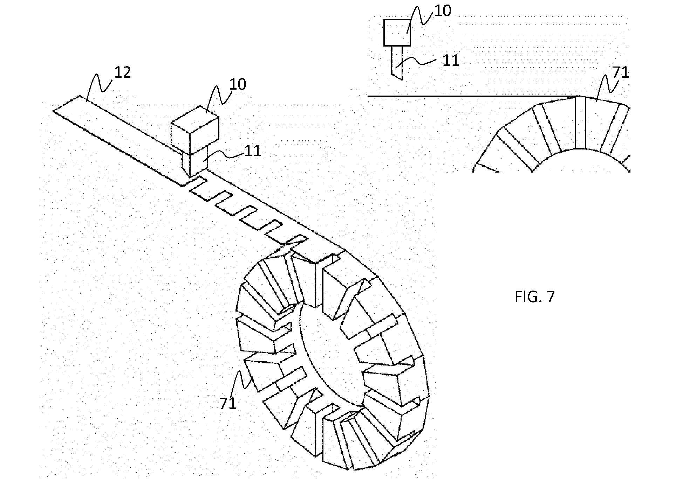

Fig. 7 zeigt die Verformung des Pakets wenn das Blechpaket bzw. N klein ist (typischerweise N=12 oder kleiner). In diesem Fall erfolgt die Verrundung des Bandes 12 beim Aufwickeln nicht oder nicht in ausreichender Weise, sodass das Blechpaket eine polygonale Form annimmt (siehe Figur). Dies ist für Hochleistungsmotoren natürlich unerwünscht, da die Motorenparameter nicht optimal sind.

Fig. 8 zeigt eine besondere Ausführungsform der erfindungsgemässen Vorrichtung, um dieses Problem zu beheben.

Die drei Drucksrollen 60, 61, 62 geben dem Band eine Vorbiegung, sodass das Blechpaket eine einwandfreie runde bzw. gekrümmte Form annimmt.

Diese drei Druckrollen 60, 61, 62 können unabhängig eingestellt werden, z.B. in Funktion der Banddicke.

Die Druckrollen 61 und 62 können waagrecht, die Druckrolle 60 senkrecht eingestellt werden.

Die hierfür notwendigen Einstellungen können entweder manuell oder automatisch beispielsweise durch elektrischen Positioniermitteln erfolgen.

Der Rollendruck kann vorzugsweise durch eine Feder, aber auch pneumatisch oder hydraulisch erzeugt werden.

Die Einstellungen der Rollen und deren Druck sind vorzugsweise automatisch durch die Steuerung der Maschine gesteuert, indem die Einstellungen aus einer Datenbank genommen werden. Eine Regelung in geschlossener Schleife ist auch vorteilhaft einsetzbar, wo die Rundheit des Pakets eine Priorität der Bearbeitung ist.

In diesem Fall wird die Rundheit des Pakets beim Wicklen optisch gemessen, und eventuelle Abweichungen von der Sollrundheit korrigiert, indem die Einstellungen der Rollen angepasst wird.

**Legende zu den Figuren:**

| | |
|---|---|
| 1 | Blechpaket |
| 2 | Nut |
| 3 | gewickelter Stator |
| 10 | Stanzeinheit |
| 11 | Stanzwerkzeug |
| 12 | Blechband |
| 13 | Sperrrad |
| 14 | Gleitebene |
| 15 | Führungen |
| 16 | Führungsrollen |
| 17 | Stanzpunkt |
| 18 | Halbierungslinie |
| 19 | Dorn |
| 20 | Wickeleinheit |
| 21 | Hydraulischer Kolben |
| 24 | Leitspindel |
| 25 | Antrieb |
| 40 | Blechpaket |
| 41 | Abstandssensor |
| 42 | Abstandssensor |
| 43 | Nutrand |
| 50 | Steuereinheit |
| 51 | Sensor |
| 52 | Sensor |
| 53 | Antrieb |
| 55 | Exzentermechanismus |
| 60 | Druckrolle |
| 61 | Druckrolle |
| 62 | Druckrolle |
| 71 | Verformtes Paket |
| 81 | Rundes Paket |

**Patentansprüche**

1. Vorrichtung zum Stanzen und Aufwickeln eines Blechbandes (12) zu einem Blechpaket (3) für die Herstellung von Statoren und Rotoren, wobei die Vorrichtung folgende Mittel enthält:

   eine Stanzeinheit (10) zum Stanzen von Nuten (2) in das Blechband (12),
   eine Wickeleinheit (20) zum Aufwickeln des gestanzten Blechbandes (12) zu einem Blechpaket(3), wobei die Stanzeinheit (10) vor der Wickeleinheit (20) angeordnet ist, wobei Antriebsmittel (21, 25) zum Verändern der relativen Position der Wickeleinheit (20) mit dem Blechpaket (3) in Bezug auf die Stanzeinheit (10) vorgesehen sind, und eine Steuerung (50, 51, 52, 55) zum Steuern der Stanzeinheit (10), der Wickeleinheit (20) und der Antriebsmittel (25) für die Einstellung der relativen Position der Wickeleinheit (20), **dadurch gekennzeichnet,**

**dass**

die Vorrichtung einen oder mehrere Sensoren (41, 42) aufweist, welche die Ist-Position (43) der Nutränder (43) auf dem gestanzten Blechband (12) erfasst und dass die Steuerung (50) der Vorrichtung die erfasste Ist-Position des gemessenen Nutrandes (43) mit der Soll-Position vergleicht und bei festgestellter Abweichung die Antriebsmittel (25) der Wickeleinheit (20) derart steuert, dass die festgestellte Positionsabweichung ausgeglichen wird.

2.  Vorrichtung nach Anspruch 1, **dadurch gekennzeichnet, dass** die Position (43) der im Blechband (12) gestanzten Nuträner (43) am Tangentenpunkt des Blechbandes (12) zum Blechpaket gemessen wird.

3.  Vorrichtung nach Anspruch 1 oder 2, **dadurch gekennzeichnet, dass** die Messung der Position (43) der im Blechband (12) gestanzten Nut (2) mittels eines optischen Sensors durchgeführt wird.

4.  Vorrichtung nach Anspruch 1 oder 2, **dadurch gekennzeichnet, dass** die Messung der Position (43) der im Blechband gestanzten Nut (2) mittels eines induktiven oder eines kapazitiven Abstandsensors durchgeführt wird.

5.  Vorrichtung nach einem der vorangehenden Ansprüche, **dadurch gekennzeichnet, dass**
die Vorrichtung die Messung der Nutränder (43) mit den Stanzvorgang synchronisiert.

6.  Vorrichtung nach einem der vorangehenden Ansprüche, **dadurch gekennzeichnet,**
**dass** ein erstes Synchronisationssignal zur Durchführung der Messung dem Zeitpunkt entspricht, an dem das Stanzwerkzeug in die Bandoberfläche eindringt.

7.  Vorrichtung nach einem der vorangehenden Ansprüche, **dadurch gekennzeichnet, dass** das ein zweites Synchronisationssignal zur Veränderung der relativer Position der Wickeleinheit in Bezug auf der Stanzeinheit dem Zeitpunkt entspricht, an dem das Stanzwerkzeug aus der Bandoberfläche zurückfährt.

8.  Vorrichtung nach Anspruch 1 bis 7, **dadurch gekennzeichnet, dass** zwischen der Stanzeinheit (10) und der Wickeleinheit (20) weitere Mittel (60, 61, 62) zur Biegung des Blechbandes (12) vorgesehen sind.

**Claims**

1.  Device for stamping and winding up a strip of sheet metal (12) to form a sheet pack (3) for the manufacture of stators and rotors, the device including the following means:

    a stamping unit (10) for stamping slots (2) into the strip of sheet metal (12), a winding unit (20) for winding up the stamped strip of sheet metal (12) to form a sheet pack (3), the stamping unit (10) being arranged upstream of the winding unit (20), driving means (21, 25) being provided for changing the relative position of the winding unit (20) with the sheet pack (3) with respect to the stamping unit (10), and a controller (50, 51, 52, 55) for controlling the stamping unit (10), the winding unit (20) and the driving means (25) for setting the relative position of the winding unit (20),
    **characterized in that**
    the device has one or more sensors (41, 42), which record(s) the actual position (43) of the slot edges (43) on the stamped strip of sheet metal (12) and **in that** the controller (50) of the device compares the recorded actual position of the measured slot edge (43) with the target position and, if a deviation is established, controls the driving means (25) of the winding unit (20) in such a way as to compensate for the positional deviation established.

2.  Device according to Claim 1, **characterized in that** the position (43) of the slot edges (43) stamped in the strip of sheet metal (12) is measured at the point of a tangent of the strip of sheet metal (12) to the sheet pack.

3.  Device according to Claim 1 or 2, **characterized in that** the measurement of the position (43) of the slot (2) stamped in the strip of sheet metal (12) is carried out by means of an optical sensor.

4.  Device according to Claim 1 and 2, **characterized in that** the measurement of the position (43) of the slot (2) stamped in the strip of sheet metal is carried out by means of an inductive or capacitive distance sensor.

5.  Device according to one of the preceding claims, **characterized in that** the device synchronizes the measurement of the slot edges (43) with the stamping operation.

**6.** Device according to one of the preceding claims, **characterized in that** a first synchronization signal for carrying out the measurement corresponds to the point in time at which the stamping tool penetrates into the surface of the strip.

**7.** Device according to one of the preceding claims, **characterized in that** a second synchronization signal, for changing the relative position of the winding unit with respect to the stamping unit, corresponds to the point in time at which the stamping tool returns from the surface of the strip.

**8.** Device according to Claims 1 to 7, **characterized in that** further means (60, 61, 62), for bending the strip of sheet metal (12), are provided between the stamping unit (10) and the winding unit (20).


**Revendications**

**1.** Dispositif d'estampage et d'enroulement d'une bande de tôle (12) pour former un paquet de tôle (3) pour la fabrication de stators et de rotors, le dispositif comprenant les moyens suivants :

une unité d'estampage (10) pour l'estampage de rainures (2) dans la bande de tôle (12), une unité d'enroulement (20) pour enrouler la bande de tôle estampée (12) pour former un paquet de tôle (3),
l'unité d'estampage (10) étant disposée avant l'unité d'enroulement (20), des moyens d'entraînement (21, 25) pour modifier la position relative de l'unité d'enroulement (20) avec le paquet de tôle (3) par rapport à l'unité d'estampage (10) étant prévus, et une commande (50, 51, 52, 55) pour commander l'unité d'estampage (10), l'unité d'enroulement (20) et le moyen d'entraînement (25) pour l'ajustement de la position relative de l'unité d'enroulement (20),
**caractérisé en ce que**
le dispositif présente un ou plusieurs capteurs (41, 42), qui détectent la position réelle (43) des bords de rainure (43) sur la bande de tôle estampée (12) et **en ce que** la commande (50) du dispositif compare la position réelle détectée du bord de rainure mesuré (43) avec la position de consigne et en cas de constatation d'écart, commande les moyens d'entraînement (25) de l'unité d'enroulement (20) de telle sorte que l'écart de position constaté soit compensé.

**2.** Dispositif selon la revendication 1, **caractérisé en ce que** la position (43) des bords de rainure estampés (43) dans la bande de tôle (12) est mesurée au niveau du point de la tangente de la bande de tôle (12) avec le paquet de tôle.

**3.** Dispositif selon la revendication 1 ou 2, **caractérisé en ce que** la mesure de la position (43) de la rainure (2) estampée dans la bande de tôle (12) est effectuée au moyen d'un capteur optique.

**4.** Dispositif selon la revendication 1 ou 2, **caractérisé en ce que** la mesure de la position (43) de la rainure (2) estampée dans la bande de tôle est effectuée par un capteur de distance inductif ou capacitif.

**5.** Dispositif selon l'une quelconque des revendications précédentes, **caractérisé en ce que** le dispositif synchronise la mesure des bords de rainure (43) avec l'opération d'estampage.

**6.** Dispositif selon l'une quelconque des revendications précédentes, **caractérisé en ce qu'**un premier signal de synchronisation pour effectuer la mesure correspond à l'instant auquel l'outil d'estampage pénètre dans la surface de la bande.

**7.** Dispositif selon l'une quelconque des revendications précédentes, **caractérisé en ce qu'**un deuxième signal de synchronisation pour modifier la position relative de l'unité d'enroulement par rapport à l'unité d'estampage correspond à l'instant auquel l'outil d'estampage repart de la surface de la bande.

**8.** Dispositif selon les revendications 1 à 7, **caractérisé en ce qu'**entre l'unité d'estampage (10) et l'unité d'enroulement (20) sont prévus d'autres moyens (60, 61, 62) pour faire fléchir la bande de tôle (12).

FIG. 1

FIG. 2A

FIG. 2B

FIG. 3

PØ

ε

42    41

40

FIG. 4A

43

PØ

ε

41

FIG. 4B

FIG. 4C

FIG. 4D

FIG. 5

FIG. 6

FIG. 7

FIG. 8

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 4403489 A